# EUROPEAN PATENT SPECIFICATION

(11) **EP 0 679 171 B1**
(45) Date of publication and mention of the grant of the patent: **10.07.2002**
(21) Application number: 94907242.5
(22) Date of filing: 13.01.1994
(51) Int. Cl.: C08L 67/02, C08K 3/22, H01B 3/42, H01B 7/29

(54) **INSULATED WIRE**
ISOLIERTES KABEL
FIL ISOLE

(30) Priority: 14.01.1993 US 4749
(43) Date of publication of application: 02.11.1995
(73) Proprietor: Tyco Electronics Corporation, Middletown, PA 17057-3163 (US)
(72) Inventor: TONDRE, Stephen, L., Fremont, CA 94555 (US); YEUNG, Alan, S., Redwood City, CA 94065 (US)
(74) Representative: Jay, Anthony William
(86) International application number: US9400624
(87) International publication number: WO9416014

(56) References cited:
- EP-A- 0 057 415
- WO-A-91/19760
- DE-A- 2 331 826
- DE-A- 2 915 155
- US-A- 3 985 926
- US-A- 5 081 176

## Description

This invention relates to polyester compositions suitable for use as insulation on wires.

Many polyester compositions are known, some of which can be melt-shaped, e.g. melt-extruded around a conductor to provide an insulating coating. The physical and electrical properties of such polyester compositions, including flammability and smoke generation when burnt, are very important. Reference may be made for example to United States Patent Nos. 2,167,278, 3,671,487, 3,835,089, 4,048,128, 4,332,855, and 5,081,176, PCT Publication No. 91/19760 and European Patent Publication No. 0 057 415.

EP-A-0057415 discloses molding compositions containing polyethylene terephthalate (PET) and/or polybutylene terephthalate (PBT or PTMT), 100 parts, and polycaprolactone (PCL), 0.1 to 30 parts. It is stated that the PCL promotes the crystallization of the polyester, and thus results in a molded product having improved dimensional stability and mechanical strength. It is also stated that the composition may also contain "a small amount" of a third polymer, and a broad range of such polymers is briefly disclosed, including "polyester elastomers". No further explanation or example of the use of a third polymer is provided. The molding composition preferably contains glass fibers or another inorganic filler. It may also contain a nucleating agent; a broad range of nucleating agents is briefly described, including oxides, sulfates, phosphates, silicates, oxalates, stearates, benzoates, salicylates and tartrates of metals of Group II of the Periodic Table.

DE-A-2915155 and equivalent US-A-4332855 disclose compositions which can be melt extruded to form insulation around wires and which contain PTMT, 100 parts, and a polyester block copolymer, e.g. "Hytrel", 10-100 parts. It is stated that polyester block copolymer reduces the susceptibility of the PTMT to embrittlement. The composition can also contain a third polymer, preferably in amount less than 20%; but no examples of such third polymers are given.

WO-A-9119760 discloses compositions which can be melt extruded to form insulation around the wires and which contain PBT or another poly(alkylene terephthalate), at least 30%; polycaprolactone (PCL) or another polyactone, at least 3%; a carbodiimide, 0.05-10%; and an aliphatic phosphite, 0.05-10%. It is stated that the carbodiimide and the phosphite improve the thermal stability of the composition. The composition can also contain various additives, including flame retardants and pigments.

US-A-5081176 discloses compositions which contain PBT or another polyalkylene terephthalate, at least 20%, and SnO, at least 1%. The compositions preferably contain glass fibres or another reinforcing filler. It is stated that the presence of the SnO reduces the smoke released when the composition is burned. The composition preferably also contains PTFE (0-20%).

The present invention provides an insulated wire which comprises
(1) a solid or stranded wire, and
(2) an insulating coating on the wire, said coating being composed of a melt-extruded polymeric composition which is free from glass fibres and which comprises a polymeric component comprising a major amount of an aromatic polyester and a minor amount of an aliphatic polyester;
characterized in that the polymeric component comprises
(A) at least 60 % of at least one aromatic polyester,
(B) 3 to 20% of at least one aliphatic polyester, and
(C) 3 to 20% of at least one thermoplastic elastomer containing polyester blocks,
the percentages being by weight based on the weight of the polymeric component, and the composition contains 3 to 60% by weight, based on the weight of the composition, of SnO.

The insulating coating can be the sole insulating coating. Alternatively, if there are several coatings, it may be the innermost coating, or the outermost coating, or an intermediate coating.

The aromatic polyester is preferably poly(1, 4-butylene terephthalate); other aromatic polyesters which can be used include polyethylene terephthalate and those disclosed in the documents referred to above. The aliphatic polyester is preferably polycaprolactone. The thermoplastic elastomer is preferably a polyester thermoplastic elastomer, e.g. one of the polymers sold under the trade names Arnitel and Hytrel. The thermoplastic elastomer can for example contain aromatic polyester blocks (e.g. polybutylene terephthalate blocks) and aliphatic polyester blocks (e.g. polybutylene succinate) linked to each other, for example through urethane linkages. Arnitel is an example of such a thermoplastic elastomer. The polymers (A), (B) and (C) preferably constitute 80-100%, particularly 90-100%, by weight of the polymeric component. Other polymers which can be present in the polymeric component include polyolefins and the polymers disclosed in the documents referred to above, in particular U.S. Patent No. 4,332,855. Preferably all the polymers in the composition are compatible with the aromatic polyester and have a solubility parameter which differs by at most 1.5 from the solubility parameter of the aromatic polyester. Preferably all the polymers in the composition are free from halogen.

The novel insulating coatings show remarkably good heat aging properties, in particular in their retention of elongation and tensile strength when aged at elevated temperatures, e.g. for 168 hours at 150°C. Preferably, they retain at least 50% of their elongation and at least 80% of their tensile strength (at room temperature) after aging for 168 hours at 150° and preferably after aging for 168 hours at 180°C. The improved retention of physical properties apparently results from the presence of both ingredient (B) and ingredient (C), and makes it possible to include relatively large quantities of additives which improve flame retardance and/or smoke suppression, without unacceptable loss of elongation and tensile strength. This is especially important in wires to be used in automobiles, trains, trams and other transit vehicles, and in other uses where wires are subject to high ambient temperatures.

We have discovered that the novel insulating coatings show a surprising improvement in flame retardance and/or smoke reduction when they contain SnO. The amount of SnO is selected to provide the desired level of improved flame retardance and/or smoke reduction without unacceptable impairment of other physical and/or electrical properties. The amount is generally 3 to 60%, e.g. 10 to 50%, preferably 15 to 45%, by weight of the composition. The metal oxide can be the sole ingredient which provides flame retardance and/or smoke suppression to the composition, or other such ingredients can be present. Examples of other ingredients are other metal oxides and known additives, for example those disclosed in the documents referred to above. However, the compositions are preferably free from halogen-containing ingredients. The presence of SnO makes it possible to reduce the amount of such known additives. Preferably, the total weight percent of SnO and other additives is less than (preferably at least 3% less than, particularly at least 10% less than) the weight percent of those additives which, in a composition which is identical except that it does not contain SnO, produces the same level of flame retardance and/or smoke suppression in one of the known tests for such properties, e.g. Limiting Oxygen Index (ASTM D 2863-74), Flammability (SAE J1128 MIL-W-81044, or ASTM D 3032-84) or Smoke Generation (ASTM E 662). Other ingredients which can be present include phosphorus-containing flame retardants and/or Mg(OH)₂, the amount of Mg(OH)₂ being reduced to a level which avoids the problems which otherwise arise when using these together, in particular degradation and foaming of the polyester.

The novel insulating coatings are free from glass fibers and are preferably free from all reinforcing fillers. The coating can be of any appropriate thickness, e.g. 0.025 inch (0.0635 cm), preferably 0.008 to 0.018 inch (0.02 to 0.046 cm). Coatings as thin as 0.005 inch (0.0125 cm) may be useful, particularly in conjunction with other coatings.

The insulating layer contains SnO; it is thus gray in color. It may be desirable to provide an outermost layer constructed of a different polymer for purposes of appearance.

### EXAMPLES 1 - 10

The ingredients and amounts thereof set out in the Table were mixed together in a Brabender, and then melt-extruded over a 20 AWG 19/32 tin-coated copper stranded wire as a coating 0.010 inch (0.025 cm) thick. The products were tested and the results are set out in the Table.

Polybutylene terephthalate (PBT) used in Examples 1-10 was Celanex 1600A available from Hoechst-Celanese. Tone P700, Tone P767 and Tone P787 are polycaprolactones of different molecular weights available from Union Carbide. Arnitel used was thermoplastic elastomer with polyester blocks available from AKZO. The formulation for the stabilizer used in Examples 1-4 and 6-10 was 1.75% polycarbodiimide (PCD), 1.75% of a hindered phenolic antioxidant (Irganox 1010) and 0.88% of an aliphatic phosphite (Western 619). The formulation for the stabilizer used in Example 5 was 2.2% polycarbodiimide (PCD), 2.2% of a hindered phenolic antioxidant (Irganox 1010) and 1.2% of an aliphatic phosphite (Western 619).

The elongation and tensile tests were carried out on 3 inch (7.5 cm) samples removed from the wire. The VW-1 tests were carried out in accordance with the UL VW-1 test, and the results are expressed in the form x/y, where y is the number of samples tested and x is the number of samples which passed the test.

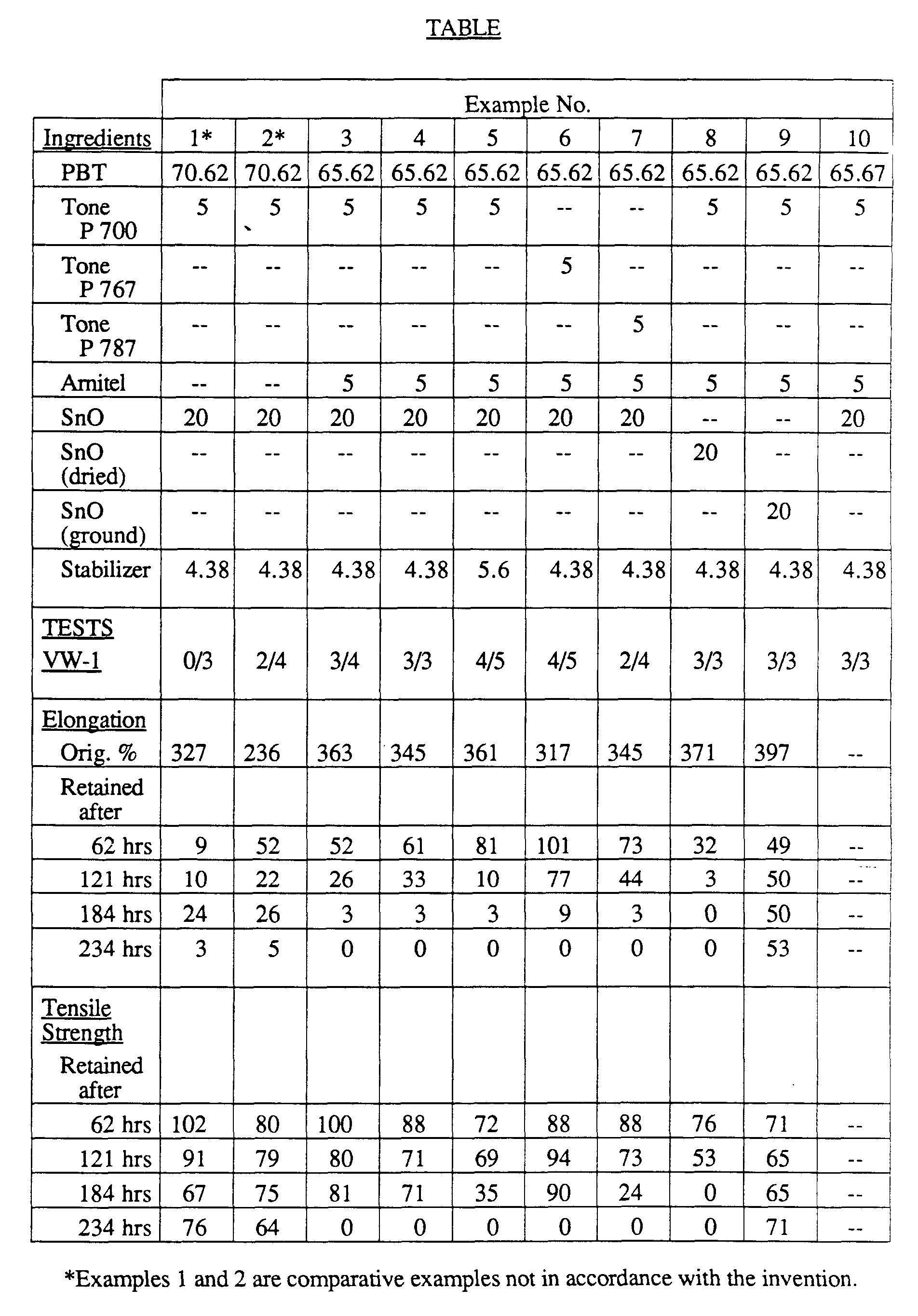

## Claims

1. An insulated wire which comprises
(1) a solid or stranded wire, and
(2) an insulating coating on the wire, said coating being composed of a melt -extruded polymeric composition which is free from glass fibres and which comprises a polymeric component comprising a major amount of an aromatic polyester and a minor amount of an aliphatic polyester;
**characterized in that** the polymeric component comprises
(A) at least 60 % of at least one aromatic polyester,
(B) 3 to 20% of at least one aliphatic polyester, and
(C) 3 to 20% of at least one thermoplastic elastomer containing polyester blocks, the percentages being by weight based on the weight of the polymeric component, and the composition contains 3 to 60% by weight based on the weight of the composition, of SnO.

2. An insulated wire according to claim 1 wherein the polymeric component comprises
(A) 75 to 85% of the aromatic polyester,
(B) 6 to 10% of the aliphatic polyester, and
(C) 6 to 10% of the thermoplastic elastomer.

3. An insulated wire according to claim 2 wherein the aromatic polyester is polybutylene terephthalate and the aliphatic polyester is polycaprolactone.

4. An insulated wire according to any one of the preceding claims wherein the polymers (A), (B) and (C) constitute 80 to 100% by weight of the polymeric component.

5. An insulated wire according to any one of the preceding claims wherein the composition contains 10 to 50% by weight, based on the weight of the composition, of SnO.

6. An insulated wire according to any one of the preceding claims wherein the composition contains (a) SnO and (b) Mg(OH)₂ and/or a phosphorus-containing flame retardant.

7. An insulated wire according to any one of the preceding claims wherein the composition is free from halogen-containing ingredients.

8. An insulated wire according to any one of the preceding claims wherein the composition is free from halogen-containing ingredients and contains
(i) a polymeric component which comprises
(A) 70 to 90% of polybutylene terephthalate,
(B) 5 to 15% of polycaprolactone, and
(C) 5 to 15% of a thermoplastic elastomer containing polyester blocks.
the ingredients (A), (B) and (C) constituting 80 to 100% of the polymeric component, the percentages being by weight based on the weight of the polymeric component; and
(ii) 10 to 50%, preferably 15 to 45%, by weight, based on the weight of the composition, of SnO.

9. An insulated wire according to any one of the preceding claims which also comprises a second insulating coating, outside the coating composed of said composition.

## Patentansprüche

1. Isolierter Draht, der folgendes aufweist:
(1) einen Voll- oder Litzendraht und
(2) einen Isolierüberzug auf dem Draht, wobei der Überzug aus einer schmelzextrudierten polymeren Zusammensetzung besteht, die frei von Glasfasern ist und eine polymere Komponente aufweist, die eine größere Menge eines aromatischen Polyesters und eine kleinere Menge eines aliphatischen Polyesters aufweist;
**dadurch gekennzeichnet, daß** die polymere Komponente folgendes aufweist:
(A) wenigstens 60 % von wenigstens einem aromatischen Polyester,
(B) 3 bis 20 % von wenigstens einem aliphatischen Polyester und
(C) 3 bis 20 % von wenigstens einem thermoplastischen Elastomer, das Polyesterblöcke enthält, wobei die Prozentsätze Gewichtsprozentsätze, bezogen auf das Gewicht der polymeren Komponente, sind und die Zusammensetzung 3 bis 60 Gew.-% SnO, bezogen auf das Gewicht der Zusammensetzung, enthält.

2. Isolierter Draht nach Anspruch 1, wobei die polymere Komponente folgendes aufweist:
(A) 75 bis 85 % des aromatischen Polyesters,
(B) 6 bis 10 % des aliphatischen Polyesters und
(C) 6 bis 10 % des thermoplastischen Elastomers.

3. Isolierter Draht nach Anspruch 2, wobei der aromatische Polyester Polybutylenterephthalat und der aliphatische Polyester Polycaprolacton ist.

4. Isolierter Draht nach einem der vorhergehenden Ansprüche, wobei die Polymere (A), (B) und (C) 80 bis 100 Gew.-% der polymeren Komponente ausmachen.

5. Isolierter Draht nach einem der vorhergehenden Ansprüche, wobei die Zusammensetzung 10 bis 50 Gew.-% SnO, bezogen auf das Gewicht der Zusammensetzung, enthält.

6. Isolierter Draht nach einem der vorhergehenden Ansprüche, wobei die Zusammensetzung (a) SnO und (b) Mg(OH)₂ und/oder ein phosphorhaltiges Flammschutzmittel enthält.

7. Isolierter Draht nach einem der vorhergehenden Ansprüche, wobei die Zusammensetzung frei von halogenhaltigen Bestandteilen ist.

8. Isolierter Draht nach einem der vorhergehenden Ansprüche, wobei die Zusammensetzung frei von halogenhaltigen Bestandteilen ist und folgendes enthält:
(i) eine polymere Komponente, die folgendes aufweist:
(A) 70 bis 90 % Polybutylenterephthalat,
(B) 5 bis 15 % Polycaprolacton und
(C) 5 bis 15 % eines thermoplastischen Elastomers, das Polyesterblöcke enthält,
wobei die Bestandteile (A), (B) und (C) 80 bis 100 % der polymeren Komponente ausmachen, und die Prozentsätze Gewichtsprozentsätze, bezogen auf das Gewicht der polymeren Komponente, sind; und
(ii) 10 bis 50 Gew.-%, bevorzugt 15 bis 45 Gew.-% SnO, bezogen auf das Gewicht der Zusammensetzung.

9. Isolierter Draht nach einem der vorhergehenden Ansprüche, der ferner einen zweiten Isolierüberzug an der Außenseite des aus der Zusammensetzung bestehenden Überzugs aufweist.

## Revendications

1. Fil isolé qui comprend
(1) un fil plein ou divisé, et
(2) un revêtement isolant sur le fil, ledit revêtement étant constitué d'une composition polymère extrudée en masse fondue, qui est dépourvue de fibres de verre et qui comprend un constituant polymère comprenant une quantité dominante d'un polyester aromatique et une petite quantité d'un polyester aliphatique ;
**caractérisé en ce que** le constituant polymère comprend
(A) au moins 60 % d'au moins un polyester aromatique,
(B) 3 à 20 % d'au moins un polyester aliphatique, et
(C) 3 à 20 % d'au moins un élastomère thermoplastique contenant des blocs polyester, les pourcentages étant exprimés en poids sur la base du poids du constituant polymère, et la composition contenant 3 à 60 % en poids, sur la base du poids de la composition, de SnO.

2. Fil isolé suivant la revendication 1, dans lequel le constituant polymère comprend
(A) 75 à 85 % du polyester aromatique,
(B) 6 à 10 % du polyester aliphatique et
(C) 6 à 10 % de l'élastomère thermoplastique.

3. Fil isolé suivant la revendication 2, dans lequel le polyester aromatique est un polymère de téréphtalate de butylène et le polyester aliphatique est la polycaprolactone.

4. Fil isolé suivant l'une quelconque des revendications précédentes, dans lequel les polymères (A), (B) et (C) représentent 80 à 100 % en poids du constituant polymère.

5. Fil isolé suivant l'une quelconque des revendications précédentes, dans lequel la composition contient 10 à 50 % en poids, sur la base du poids de la composition, de SnO.

6. Fil isolé suivant l'une quelconque des revendications précédentes, dans lequel la composition contient (a) du SnO et (b) du Mg(OH)₂ et/ou un retardateur de flamme contenant du phosphore.

7. Fil isolé suivant l'une quelconque des revendications précédentes, dans lequel la composition est dépourvue d'ingrédients halogénés.

8. Fil isolé suivant l'une quelconque des revendications précédentes, dans lequel la composition est dépourvue d'ingrédients halogénés et contient
(i) un constituant polymère qui comprend
(A) 70 à 90 % de polymère de téréphtalate de butylène,
(B) 5 à 15 % de polycaprolactone, et
(C) 5 à 15 % d'un élastomère thermoplastique contenant des blocs polyesters, les ingrédients (A), (B) et (C) représentant 80 à 100 % du constituant polymère, les pourcentages étant exprimés en poids sur la base du poids du constituant polymère ; et
(ii) 10 à 50 %, de préférence 15 à 45 %, en poids, sur la base du poids de la composition, de SnO.

9. Fil isolé suivant l'une quelconque des revendications précédentes, qui comprend également un second revêtement isolant, à l'extérieur du revêtement constitué de ladite composition.
